# EUROPÄISCHE PATENTANMELDUNG

(11) **EP 1 253 726 A1**
(43) Veröffentlichungstag der Anmeldung: **30.10.2002**
(21) Anmeldenummer: 01124909.1
(22) Anmeldetag: 18.10.2001
(51) Int. Cl.: H04B 7/005

(54) **Wahlverfahren zur Reduzierung der Sendeleistung eines Kommunikationsendgerätes durch den Teilnehmer**

(71) Anmelder: SIEMENS AKTIENGESELLSCHAFT, 80333 München (DE)
(72) Erfinder: Fuenfgelder, Helmut, 85386 Dietersheim (DE); Sigg, Jakob, Dr., 85635 Hoehenkirchen (DE)

(57) **Zusammenfassung**

Verfahren zum wahlweisen Einstellen der Sendeleistung eines mobilen Kommunikations-Endgeräts und Kommunikations-Endgerät

Die Erfindung betrifft ein Verfahren zum wahlweisen Einstellen der Sendeleistung eines mobilen Kommunikations-Endgeräts, insbesondere eines Mobilfunk-Endgeräts, umfassend die Schritte:
A) Bestimmen (S3) wenigstens eines ersten Sendeleistungswertes, bei welchem eine stabile Funkverbindung zwischen dem Kommunikations-Endgerät und einer Basisstation mit hinreichend hoher Übertragungsqualität gewährleistet ist,
B) Bestimmen wenigstens eines zweiten Sendeleistungswertes (S4), welcher gegenüber dem ersten Sendeleistungswert um einen Sendeleistungs-Differenzwert reduziert ist,
C) Auswählen eines Sendeleistungswerts (S8, S9, S10) aus dem wenigstens einen ersten und zweiten Sendeleistungswert und
D) Einstellen der aktuellen Ist-Sendeleistung (S9, S10) des mobilen Kommunikations-Endgeräts nach Maßgabe der Auswahl gemäß Schritt C).
Die Erfindung betrifft ferner ein entsprechendes Kommunikations-Endgerät.

## Beschreibung

Die Erfindung betrifft ein Verfahren zum wahlweisen Einstellen der Sendeleistung eines mobilen Kommunikations-Endgeräts, insbesondere eines Mobilfunk-Endgeräts, und ein entsprechendes Kommunikations-Endgerät.

Die Sendeleistung eines mobilen Kommunikations-Endgeräts, mit welcher Daten von dem mobilen Kommunikations-Endgerät an eine Basisstation gesendet werden, ist mitunter maßgeblich für die Qualität einer Mobilfunkverbindung. Um eine hinreichend hohe Sendeleistung zu gewährleisten, ist beispielsweise bei der weit verbreiteten GSM-Technologie vorgesehen, daß die Basisstation dem Mobilfunk-Endgerät einen bestimmten Sendeleistungswert vorgibt, mit welchem das mobile Kommunikations-Endgerät dann - im Rahmen eines bestimmten Toleranzbereichs - die Daten an die Basisstation überträgt. Der vorgegebene Sendeleistungswert ist derart gewählt, daß er in Anpassung an die herrschenden Netzbedingungen eine zuverlässige Übertragung bei geringer wahrscheinlichkeit für ein Abreißen der Verbindung gewährleistet. Dies liegt insbesondere im Interesse der Betreiber des jeweiligen Mobilfunknetzes einerseits, da diese ihren Kunden, nämlich den Nutzern der Mobilfunknetze, zuverlässige Telefonie- und Datenübertragungsdienste bereitstellen möchten. Andererseits sind selbstverständlich die Nutzer daran interessiert, zuverlässige Telefonie- und Datenübertragungsdienste nutzen zu können, bei welchen eine hohe Verbindungsqualität gewährleistet und ein Abreißen der Verbindung weitgehend ausgeschlossen ist. Gleichermaßen steigt jedoch derzeit das Interesse an Kommunikations-Endgeräten, welche die Nutzung von mobilen Kommunikationsdiensten unter Einsatz möglichst kleiner Sendeleistungswerte erlauben. In diesem Zusammenhang gewinnt der Begriff "SAR-Wert" zunehmend an Bedeutung. Unter SAR-Wert versteht man einen jeweils im Nahfeld eines Mobilfunk-Endgeräts nach bestimmten Vorgaben ermittelten Maximalwert der pro Gramm Körpermasse absorbierten Leistung. Hierzu wird auf die europäische Norm prEN50361 (derzeit noch im Entwurfsstadium) verwiesen, wo Details zur SAR-Wert-Ermittlung angegeben sind.

Grundsätzlich läßt sich sagen, daß mit Reduzierung der abgegebenen Sendeleistung auch der SAR-Wert eines mobilen Kommunikations-Endgeräts reduziert wird. Darüber hinaus hat die Reduzierung der von einem mobilen Kommunikations-Endgerät abgegebenen Sendeleistung ferner zur Folge, daß auch der Stromverbrauch reduziert wird, woraus sich längere Standby-Zeiten bzw. längere Talktime-Zeiten des mobilen Kommunikations-Endgeräts ergeben. Dies erhöht die Attraktiviät eines mobilen Kommunikations-Endgeräts sowohl für Benutzer als auch für Mobilfunk-Netzbetreiber.

Es ist eine Aufgabe der vorliegenden Erfindung ein Verfahren der eingangs bezeichneten Art bereitzustellen, mit welchem im Rahmen vorgegebener Toleranzgrenzen die Sendeleistung eines mobilen Kommunikations-Endgeräts individuell einstellbar ist.

Diese Aufgabe wird durch ein Verfahren zum wahlweisen Einstellen der Sendeleistung eines mobilen Kommunikations-Endgeräts, insbesondere eines Mobilfunk-Endgeräts, gelöst, umfassend die Schritte:
A) Bestimmen wenigstens eines ersten Sendeleistungswertes, bei welchem eine stabile Funkverbindung zwischen dem Kommunikations-Endgerät und einer Basisstation mit hinreichend hoher Übertragungsqualität gewährleistet ist,
B) Bestimmen wenigstens eines zweiten Sendeleistungswertes, welcher gegenüber dem ersten Sendeleistungswert um einen Sendeleistungs-Differenzwert reduziert ist,
C) Auswählen eines Sendeleistungswerts aus dem wenigstens einen ersten und zweiten Sendeleistungswert und
D) Einstellen der aktuellen Ist-Sendeleistung des mobilen Kommunikations-Endgeräts nach Maßgabe der Auswahl gemäß Schritt C).

Durch Schritt C) und Schritt D) ist eine individuelle Einstellung des Sendeleistungswertes durch den jeweiligen Benutzer des mobilen Kommunikations-Endgeräts möglich. Dies bedeutet, daß der Benutzer je nach eigenen Vorstellungen entweder den ersten höheren Sendeleistungswert auswählen kann, bei welchem eine stabile Funkverbindung zwischen dem Kommunikations-Endgerät und der Basisstation gewährleistet ist, oder dann wenn der Benutzer es vorzieht, das mobile Kommunikations-Endgerät mit niedrigerem SAR-Wert und geringerem Stromverbrauch zu betreiben, den zweiten Sendeleistungswert auswählen kann. Bei der zweiten Alternative nimmt er jedoch in Kauf, daß möglicherweise, jedoch nicht zwingend, die Übertragungsqualität oder Stabilität der Funkverbindung nach Maßgabe des Sendeleistungs-Differenzwerts reduziert ist.

In einer Weiterbildung der Erfindung kann vorgesehen sein, daß der erste Sendeleistungswert von der Basisstation vorgegeben wird. Dies ist beispielsweise bei verbreiteten Mobilfunk-Standards der Fall, wie z.B. bei dem GSM-Standard.

In diesem Zusammenhang kann ferner vorgesehen sein, daß der erste Sendeleistungswert von der Basisstation als ein Leistungssteuerwert aus einer Mehrzahl von Leistungssteuerwerten mitgeteilt wird, wobei jedem Leistungssteuerwert ein zulässiger Toleranzbereich zugeordnet ist. Beispielsweise sind je nach gewähltem Mobilfunk-Standard, wie beispielsweise im GSM900-Standard, bestimmten Leistungssteuerwerten bestimmte Sendeleistungswerte sowie Toleranzbereiche zugeordnet, so daß durch die Mitteilung des Leistungssteuerwerts von der Basisstation an das mobile Kommunikations-Endgerät dieses lediglich den dem mitgeteilten Sendeleistungswert zugeordneten Leistungssteuerwert aus seinem Speicher auslesen muß und entsprechend die Endstufe des mobilen Kommunikations-Endgeräts ansteuert. Dabei kann vorgesehen sein, daß der zweite Sendeleistungswert gegenüber dem ersten Sendeleistungswert innerhalb des zulässigen Toleranzbereichs reduziert wird. Dies bedeutet, daß die individuelle Einstellung der Sendeleistung in dem mobilen Kommunikations-Endgerät im Rahmen des standardmäßig vorgesehenen Toleranzbereichs erfolgt, so daß trotz der individuellen Einstellung stets das mobile Kommunikations-Endgerät mit einer Sendeleistung, die innerhalb der im jeweiligen Standard vorgesehenen Spezifikationen liegt. Als Beispiel sei auf die nachfolgende Tabelle verwiesen, welche die Leistungssteuerwerte, die Sendeleistungswerte und die standardmäßig zugeordneten Normal- und Extremtoleranzbereiche für die Mobilfunkstandards GSM 400, GSM 900, GSM 850 und GSM 700 angibt:

| **GSM 400, GSM 900, GSM 850 and GSM 700** | | | |
|---|---|---|---|
| **Leistungs- steuerwerte** | **Sendeleistungs- werte (dBm)** | **Toleranzbereiche (dB) für Zustand** | |
| | | **normal** | **extrem** |
| 0-2 | 39 | ±2 | ±2,5 |
| 3 | 37 | ±3 | ±4 |
| 4 | 35 | ±3 | ±4 |
| 5 | 33 | ±3 | ±4 |
| 6 | 31 | ±3 | ±4 |
| 7 | 29 | ±3 | ±4 |
| 8 | 27 | ±3 | ±4 |
| 9 | 25 | ±3 | ±4 |
| 10 | 23 | ±3 | ±4 |
| 11 | 21 | ±3 | ±4 |
| 12 | 19 | ±3 | ±4 |
| 13 | 17 | ±3 | ±4 |
| 14 | 15 | ±3 | ±4 |
| 15 | 13 | ±3 | ±4 |
| 16 | 11 | ±5 | ±6 |
| 17 | 9 | ±5 | ±6 |
| 18 | 7 | ±5 | ±6 |
| 19-31 | 5 | ±5 | ±6 |

Entsprechende Wertzuordnungstabellen sind für alle Mobilfunkstandards festgelegt. Hierzu wird auf die jeweiligen Spezifikationen verwiesen, beispielsweise auf den Ausschnitt 3GPP TS 45.005 V4.4.0 (2001-06) der GSM-Spezifikation.

Zu der vorstehenden Tabelle ist jedoch für den GSM-Standard anzumerken, dass bei der Wahl der Sendeleistung das in der GSM-Spezifikation (3GPP TS 45.005 V4.4.0 (2001-06), p. 13) vorgesehene Monotoniegebot zu berücksichtigen ist. Dieses Monotoniegesetz besagt, dass die Ausgangsleistung einer durch einen Leistungssteuerwert bestimmten nächst höheren Leistungsstufe mindestens 0,5dB und höchstens 3,5dB über der Leistung der darunter liegenden Leistungsstufe liegen darf. Daraus ergeben sich für die Variierung der Sendeleistungswerte beispielsweise folgende Toleranzbereiche:

| **Beispiele zu GSM 400, GSM 900, GSM 850 and GSM 700** | | |
|---|---|---|
| **Leistungs- steuerwerte** | **Sendeleistungs- werte (dBm)** | **Toleranzbereiche (dB) für Zustand** |
| 5 | 33 | ±2 |
| 6 | 31 | ±3 |
| 7 | 29 | ±3 |

Alternativ zu einer Bestimmung des zweiten Sendeleistungswerts im Rahmen der im Standard vorgesehenen Toleranzbereiche kann jedoch auch vorgesehen sein, daß der zweite Sendeleistungswert gegenüber dem ersten Sendeleistungswert innerhalb eines fest vorgegebenen Toleranzbereichs von 1 bis 5 dB, vorzugsweise um 2 bis 4 dB, am meisten bevorzugt um 3 dB reduziert wird. Dies bedeutet, daß unabhängig von dem vorgegebenen Toleranzbereich eigene Toleranzbereiche definiert werden und die Einstellung der Sendeleistung innerhalb dieser definierten Toleranzbereiche erfolgt. Selbstverständlich können diese Toleranzbereiche auch so gewählt werden, daß sie im Rahmen der vorstehend angesprochenen zulässigen Toleranzbereiche liegen, wie sie im Mobilfunkstandard definiert sind.

Bei einer Weiterbildung der Erfindung kann vorgesehen sein, daß die Auswahl in Schritt C) nach Maßgabe einer Benutzereinstellung erfolgt. Wie vorstehend bereits angedeutet wird also die Einstellung der Sendeleistung nach Maßgabe der Vorstellungen eines Benutzers durchgeführt. Dies kann beispielsweise derart erfolgen, daß die Benutzereinstellung in einem dem Kommunikations-Endgerät zugeordneten Speicher abgespeichert wird und bei jeder Verbindung zu der Basisstation aus dem Speicher ausgelesen wird. Mit anderen Worten kann der Benutzer im Rahmen eines Bedienungsmenüs seines mobilen Kommunikations-Endgerätes festlegen, ob er dieses mit dem wenigstens einen ersten Sendeleistungswert oder dem wenigstens einen zweiten Sendeleistungswert betreiben möchte, d.h. er kann festlegen, ob das mobile Kommunikations-Endgerät mit hoher Sendeleistung oder mit reduzierter Sendeleistung betrieben werden soll. Diese Einstellung wird dann in dem mobilen Kommunikations-Endgerät mit abgespeichert und bei Aufbau jeder Funkverbindung abgerufen.

Alternativ ist es auch möglich, daß die Benutzereinstellung für jedes Gespräch gesondert abgefragt und nach Maßgabe des Abfrageergebnisses gesondert vorgenommen wird. Der Benutzer hat bei dieser Ausführungsform der Erfindung bei jedem Gespräch die Wahl, ob sein mobiles Kommunikations-Endgerät mit hoher oder mit reduzierter Sendeleistung senden soll. Bei dieser Ausführungsvariante kann der Benutzer also in Abhängigkeit von der von ihm persönlich eingeschätzten Relevanz des Gesprächs den Betriebsmodus wählen. So kann der Benutzer beispielsweise bei relevanten geschäftlichen Gesprächen, bei denen eine hohe Stabilität der Funkverbindung bei gleichzeitig hoher Übertragungsqualität unabdingbar ist, den Betrieb mit dem ersten Sendeleistungswert auswählen, hingegen bei subjektiv weniger bedeutenden Gesprächen eher den Betriebsmodus mit reduzierter Sendeleistung auswählen, um somit einen niedrigeren SAR-Wert zu erreichen und um die Standby-Zeit bzw. Talktime-Zeit nur in beschränktem Maße zu reduzieren.

Es sei darauf hingewiesen, daß die Benutzereinstellung qualitativ erfolgen kann. Dies bedeutet, daß der Benutzer nicht bei der Abfrage der Benutzereinstellung mit konkreten Zahlenwerten des Toleranzbereichs, konfrontiert werden muß, sondern daß er lediglich zwischen wenigstens zwei Optionen auswählen kann, welche beispielsweise mit den Bezeichnungen "geringe Sendeleistung/geringer Stromverbrauch" sowie "hohe Sendeleistung" bezeichnet sein können. Dadurch ist eine leicht verständliche und benutzerfreundliche Menüführung gewährleistet.

In einem weiteren Ausführungsbeispiel der Erfindung kann vorgesehen sein, dass bei Auswahl des Betriebs mit reduzierter Sendeleistung das mobile Kommunikations-Endgerät überwacht, ob ein unbeabsichtigter Verbindungsabbruch bevorsteht, und dann, wenn dies der Fall ist, selbsttätig auf den Betrieb mit hoher Sendeleistung umschaltet, um somit einen Verbindungsabbruch zu verhindern. Nach Beendigung der Verbindung kann das mobile Kommunikations-Endgerät dann wieder auf den ursprünglich eingestellten Betriebsmodus mit reduzierter Sendeleistung zurückspringen.

Um dem Benutzer zusätzlich zu einer optionalen Reduzierung der Sendleistung durch einen Wechsel von erstem zu zweitem Sendeleistungswert ferner die Möglichkeit zu bieten, zum Zwecke einer weiter erhöhten Sicherheit der Mobilfunkverbindung auch sein Mobilfunk-Endgerät mit maximaler Sendeleistung zu betreiben, kann bei einer Weiterbildung der Erfindung vorgesehen sein, daß in Schritt B) wenigstens ein dritter Sendeleistungswert bestimmt wird, welcher gegenüber dem ersten und zweiten Sendleistungswert erhöht ist, und daß in Schritt C) der dritte Sendeleistungswert ausgewählt wird. Der Benutzer hat dann die Möglichkeit zwischen den Betriebsmoden "geringe Sendeleistung" - "vom Netz angeforderte Sendeleistung" - "maximale Sendeleistung" einen von ihm gewünschten Betriebsmodus auszuwählen. Es sei im Hinblick auf die vorstehende GSM-Spezifikation darauf hingewiesen, daß der dritte Sendeleistungswert ebenfalls in dem für die einzelnen Leistungssteuerwerte bzw. Sendeleistungswerte vorgesehenen Toleranzbereiche liegt.

Die Erfindung betrifft ferner ein Kommunikations-Endgerät, insbesondere ein Mobilfunk-Endgerät zum Ausführen des Verfahrens nach einem der vorangehenden Ansprüche, umfassend:
- Mittel zum Bestimmen wenigstens eines ersten Sendeleistungswertes, bei welchem eine stabile Funkverbindung zwischen dem Kommunikations-Endgerät und einer Basisstation mit hinreichend hoher Übertragungsqualität gewährleistet ist,
- Mittel zum Bestimmen wenigstens eines zweiten Sendeleistungswertes, welcher gegenüber dem ersten Sendeleistungswert um einen Sendeleistungs-Differenzwert reduziert ist,
- Mittel zum Auswählen eines Sendeleistungswerts aus dem wenigstens einen ersten und zweiten Sendeleistungswert und
- Mittel zum Einstellen der aktuellen Ist-Sendeleistung des mobilen Kommunikations-Endgeräts nach Maßgabe der Auswahl gemäß Schritt C).

In einer Weiterbildung des erfindungsgemäßen Kommunikations-Endgeräts kann vorgesehen sein, daß die Mittel zum Auswählen eines Sendeleistungswerts ein Bedienungsmenü aufweisen, bei welchem eine Abfrage einer Benutzereinstellung, insbesondere einer qualitativen Benutzereinstellung, zum Auswählen des gewünschten Sendeleistungswerts erfolgt. Darüber hinaus kann vorgesehen sein, daß das erfindungsgemäße Kommunikations-Endgerät ferner einen Speicher zum Abspeichern des ausgewählten Sendeleistungswertes oder der qualitativen Benutzereinstellung zum Auswählen eines Sendeleistungswerts aufweist.

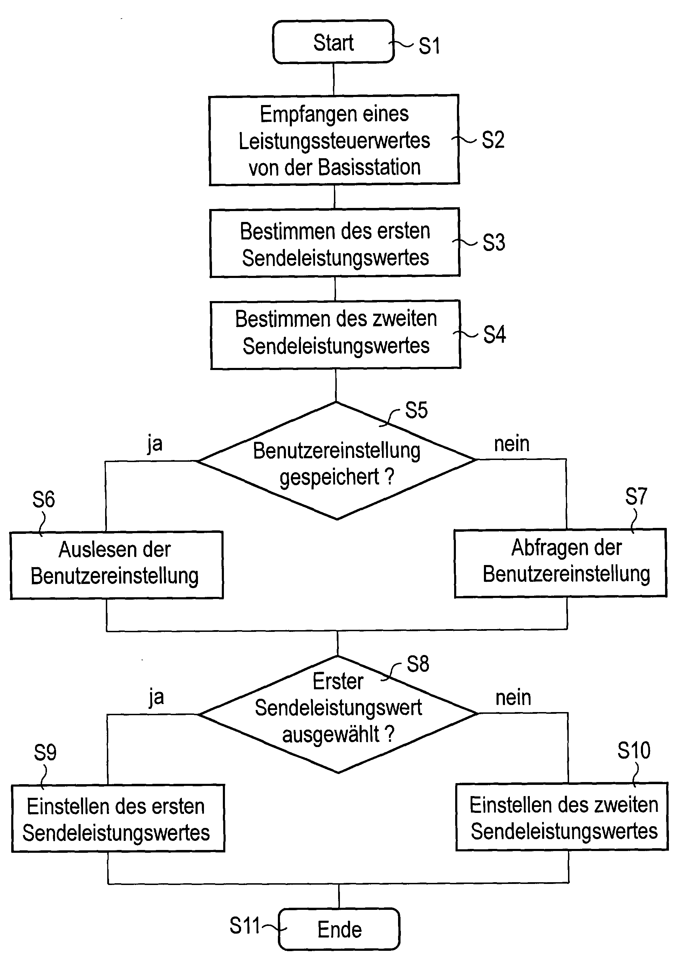

Im Folgenden wird die Erfindung anhand der beiliegenden Figur 1 erläutert, welche den Ablauf des erfindungsgemäßen Verfahrens im Rahmen eines erfindungsgemäßen mobilen Kommunikations-Endgeräts, insbesondere eines Mobilfunk-Endgeräts zeigt.

In Schritt S1 wird ein das erfindungsgemäße Verfahren abbildendes Programm gestartet, welches zur Steuerung des Mobilfunk-Endgeräts in diesem implementiert ist.

In der Folge empfängt das mobile Kommunikations-Endgerät in Schritt S2 einen bestimmten Leistungssteuerwert von der Basisstation und ordnet nach Maßgabe des empfangenen Leistungssteuerwerts diesem einen ersten Sendeleistungswert zu, wie in Schritt S3 dargestellt.

Ausgehend von dem ersten Sendeleistungswert bestimmt dann das mobile Kommunikations-Endgerät einen zweiten Sendeleistungswert in Schritt S4, beispielsweise dadurch, daß ein vorab gespeicherter Sendeleistungs-Differenzwert von dem ersten Sendeleistungswert subtrahiert wird.

Anschließend prüft das mobile Kommunikations-Endgerät in Schritt S5, ob vorab eine Benutzereinstellung abgespeichert wurde. Ist dies der Fall, so liest das mobile Kommunikations-Endgerät in Schritt S6 die abgespeicherte Benutzereinstellung aus. Ist dies nicht der Fall., so fragt in Schritt S7 das mobile Kommunikations-Endgerät zu Beginn des Aufbaus einer Funkverbindung zu einer Basisstation, beispielsweise zu Beginn eines Gesprächs, den Benutzer nach einer gewünschten Benutzereinstellung. Reagiert der Benutzer auf diese Benutzereinstellung nicht, so ist es möglich, daß das mobile Kommunikations-Endgerät standardmäßig mit dem ersten Sendeleistungswert sendet. Wird hingegen in Schritt S6 oder in Schritt S7 eine bestimmte Benutzereinstellung ausgewählt, so prüft in Schritt S8 das mobile Kommunikations-Endgerät, ob der erste Sendeleistungswert, wie er in Schritt S3 bestimmt wurde, ausgewählt wurde. Ist dies der Fall, so wird in Schritt S9 das mobile Kommunikations-Endgerät auf den ersten Sendeleistungswert eingestellt, und sendet in der Folge mit diesem ersten Sendeleistungswert. Wird hingegen wie in Schritt S8 festgestellt, daß nicht der erste, sondern der zweite Sendeleistungswert ausgewählt wurde, so wird in Schritt S10 das Mobilfunk-Endgerät auf diesen zweiten Sendeleistungswert eingestellt und sendet in der Folge mit diesem gegenüber dem ersten Sendeleistungswert reduzierten zweiten Sendeleistungswert. In Schritt S11 wird dann das Programm beendet.

Mit dem erfindungsgemäßen Verfahren bzw. mit einem entsprechend ausgerüsteten mobilen Kommunikations-Endgeräts ist es also möglich, im Rahmen der standardmäßig vorgegebenen Spezifikation die Sendeleistung eines mobilen Kommunikations-Endgeräts zu beeinflussen und dadurch den jeweiligen Betriebsmodus - hohe Verbindungsstabilität bei hoher Verbindungsqualität oder reduzierter SAR-Wert bei geringem Stromverbrauch - individuell einstellen zu können.

## Patentansprüche

1. Verfahren zum wahlweisen Einstellen der Sendeleistung eines mobilen Kommunikations-Endgeräts, insbesondere eines Mobilfunk-Endgeräts, umfassend die Schritte:
A) Bestimmen (S3) wenigstens eines ersten Sendeleistungswertes, bei welchem eine stabile Funkverbindung zwischen dem Kommunikations-Endgerät und einer Basisstation mit hinreichend hoher Übertragungsqualität gewährleistet ist,
B) Bestimmen wenigstens eines zweiten Sendeleistungswertes (S4), welcher gegenüber dem ersten Sendeleistungswert um einen Sendeleistungs-Differenzwert reduziert ist,
C) Auswählen eines Sendeleistungswerts (S8, S9, S10) aus dem wenigstens einen ersten und zweiten Sendeleistungswert und
D) Einstellen der aktuellen Ist-Sendeleistung (S9, S10) des mobilen Kommunikations-Endgeräts nach Maßgabe der Auswahl gemäß Schritt C).

2. Verfahren nach Anspruch 1,
**dadurch gekennzeichnet,**
**daß** der erste Sendeleistungswert (S2, S3) von der Basisstation vorgegeben wird.

3. Verfahren nach Anspruch 2,
**dadurch gekennzeichnet,**
**daß** der erste Sendeleistungswert (S2) von der Basisstation als ein Leistungssteuerwert aus einer Mehrzahl von Leistungssteuerwerten mitgeteilt wird, wobei jedem Leistungssteuerwert ein zulässiger Toleranzbereich zugeordnet ist.

4. Verfahren nach Anspruch 3,
**dadurch gekennzeichnet,**
**daß** der zweite Sendeleistungswert gegenüber dem ersten Sendeleistungswert innerhalb des zulässigen Toleranzbereichs reduziert wird.

5. Verfahren nach einem der vorangehenden Ansprüche,
**dadurch gekennzeichnet,**
**daß** der zweite Sendeleistungswert gegenüber dem ersten Sendeleistungswert innerhalb eines Toleranzbereichs von 1 bis 5 dB, vorzugsweise um 2 bis 4 dB, am meisten bevorzugt um 3 dB reduziert wird.

6. Verfahren nach einem der vorangehenden Ansprüche,
**dadurch gekennzeichnet,**
**daß** die Auswahl in Schritt C) nach Maßgabe einer Benutzereinstellung erfolgt (S6).

7. Verfahren nach Anspruch 6,
**dadurch gekennzeichnet,**
**daß** die Benutzereinstellung in einem dem Kommunikations-Endgerät zugeordneten Speicher abgespeichert wird und bei jeder Verbindung zu der Basisstation aus dem Speicher ausgelesen wird (S6).

8. Verfahren nach Anspruch 6 oder 7,
**dadurch gekennzeichnet,**
**daß** die Benutzereinstellung für jedes Gespräch gesondert abgefragt und nach Maßgabe des Abfrageergebnisses gesondert vorgenommen wird (S7).

9. Verfahren nach einem der Ansprüche 6 bis 8,
**dadurch gekennzeichnet,**
**daß** die Benutzereinstellung qualitativ erfolgt (S6, S7).

10. Verfahren nach einem der vorangehenden Ansprüche,
**dadurch gekennzeichnet,**
**daß** bei Auswahl des zweiten Sendeleistungswertes in Schritt C) überwacht wird, ob ein unbeabsichtigter Verbindungsabbruch bevorsteht, und dass dann, wenn dies der Fall ist, selbsttätig der erste Sendeleistungswert ausgewählt wird.

11. Verfahren nach einem der vorangehenden Ansprüche,
**dadurch gekennzeichnet,**
**daß** in Schritt B) wenigstens ein dritter Sendeleistungswert bestimmt wird, welcher gegenüber dem ersten und zweiten Sendleistungswert erhöht ist, und daß in Schritt C) der dritte Sendeleistungswert ausgewählt wird.

12. Kommunikations-Endgerät, insbesondere Mobilfunk-Endgerät, zum Ausführen des Verfahrens nach einem der vorangehenden Ansprüche, umfassend
- Mittel zum Bestimmen wenigstens eines ersten Sendeleistungswertes, bei welchem eine stabile Funkverbindung zwischen dem Kommunikations-Endgerät und einer Basisstation mit hinreichend hoher Übertragungsqualität gewährleistet ist,
- Mittel zum Bestimmen wenigstens eines zweiten Sendeleistungswertes, welcher gegenüber dem ersten Sendeleistungswert um einen Sendeleistungs-Differenzwert reduziert ist,
- Mittel zum Auswählen eines Sendeleistungswerts aus dem wenigstens einen ersten und zweiten Sendeleistungswert und
- Mittel zum Einstellen der aktuellen Ist-Sendeleistung des mobilen Kommunikations-Endgeräts nach Maßgabe der Auswahl gemäß Schritt C).

13. Kommunikations-Endgerät nach Anspruch 10, wobei die Mittel zum Auswählen eines Sendeleistungswerts ein Bedienungsmenü aufweisen, bei welchem eine Abfrage einer Benutzereinstellung, insbesondere einer qualitativen Benutzereinstellung, zum Auswählen des gewünschten Sendeleistungswerts erfolgt.

14. Kommunikations-Endgerät nach Anspruch 11, umfassend einen Speicher zum Abspeichern des ausgewählten Sendeleistungswertes oder der qualitativen Benutzereinstellung zum Auswählen eines Sendeleistungswerts.
